# EUROPÄISCHE PATENTSCHRIFT

(11) **EP 2 809 751 B1**
(45) Veröffentlichungstag und Bekanntmachung des Hinweises auf die Patenterteilung: **23.08.2017**
(21) Anmeldenummer: 13706416.8
(22) Anmeldetag: 23.01.2013
(51) Int. Cl.: C10J 3/48, C10J 3/86, C10J 3/84

(54) **VORRICHTUNG UND VERFAHREN ZUR VERGASUNG VON STAUBFÖRMIGEN, FESTEN, KOHLENSTOFFHALTIGEN BRENNSTOFFEN IM FLUGSTROM**
APPARATUS AND PROCESS FOR GASIFICATION OF SOLID HYDROCARBONACEOUS FUELS IN DUST FORM IN AN ENTRAINED FLOW
DISPOSITIF ET PROCÉDÉ DE GAZÉIFICATION DE COMBUSTIBLES POUSSIÉREUX, SOLIDES ET CARBONÉS EN LIT ENTRAÎNÉ

(30) Priorität: 03.02.2012 DE 102012001986
(43) Veröffentlichungstag der Anmeldung: 10.12.2014
(73) Patentinhaber: ThyssenKrupp Industrial Solutions AG, 45143 Essen (DE)
(72) Erfinder: LANGENKAMP, Guido, 44141 Dortmund (DE); PAVONE, Domenico, 44797 Bochum (DE); SCHIRRMEISTER, Steffen, 45472 Mülheim an der Ruhr (DE); SCHULZE ECKEL, Reinald, 48167 Münster (DE); TOPOROV, Dobrin, 44141 Dortmund (DE)
(74) Vertreter: Kilchert, Jochen
(86) Internationale Anmeldenummer: PCT/EP2013/000191
(87) Internationale Veröffentlichungsnummer: WO 2013/113478

(56) Entgegenhaltungen:
- WO-A1-2009/036985
- DE-A1-102005 041 931
- DE-A1-102007 030 779
- DE-A1-102007 044 726
- US-A1- 2010 139 581

## Beschreibung

Die Erfindung betrifft ein Verfahren und eine Vorrichtung zur Vergasung von staubförmigen, festen, kohlenstoffhaltigen Brennstoffen im Flugstrom.

Bei den bislang ausgeführten Anlagen im technischen Maßstab zur Flugstromvergasung wurden sowohl für den "Shell Coal Gasification Process (SCGP)" als auch für den "Pressurized Entrained Flow Process (PRENFLO)" Systeme mit einer Abhitzenutzung realisiert, weil diese in dem "Integrated Gasification and Combined Cycle (IGCC)" ohne Kohlendioxidabscheidung Vorteile hinsichtlich des Wirkungsgrads bieten. Dabei wird die fühlbare Wärme des im Vergaser erzeugten Rohgases über Wärmeaustauschflächen in Dampf umgesetzt, der dann in einer Dampfturbine in elektrischen Strom transformiert wird.

Bei Kraftwerksprozessen mit Kohlendioxidabscheidung, "Carbon Capture and Storage, IGCC-CCS", und dem Einsatz einer Kohlevergasung zur Herstellung diverser chemischer Produkte, z.B. "Coal to Liquid (CTL)", "Fischer-Tropsch (FT)", Methanol, Ammoniak, wird in der Prozesskette das Kohlenmonoxid partiell oder vollständig konvertiert, um das jeweilige nötige Kohlenmonoxid-Wasserstoff-Verhältnis im Synthesegas zu generieren. Dazu wird das Rohgas im Verhältnis von 1 zu 1,2 bis 1 zu 1,4 mit Wasserdampf angereichert. Bei Systemen mit einer Abhitzenutzung wird der mit hohem apparativem Aufwand erzeugte Wasserdampf nach einer geringfügigen energetischen Nutzung in der Dampfturbine dem Rohgas anschließend wieder zugemischt.

Die Erhöhung des Wasserdampfanteils im Rohgas kann mit einem erheblich reduzierten apparativen Aufwand auch durch das direkte Quenchen des Rohgasstroms mit Wasser erreicht werden. In dieser Verfahrensvariante wird das 1200 bis 1500 °C heiße Rohgas am Austritt der Vergasungskammer direkt mit Wasser beaufschlagt und gleichzeitig abgekühlt. Die gesamten Wärmeaustauschflächen mit dem entsprechenden Zubehör, wie beispielsweise die Dampftrommel und Kreislaufpumpen, entfallen gegenüber Verfahrensvarianten mit Abhitzenutzung durch Dampferzeugung.

Die direkte Wasserzugabe in den Prozessgasstrom birgt jedoch auch verfahrenstechnische Probleme. Bei einem Quench des Rohgasstromes mit Wasser kann es nämlich zu Materialermüdungsproblemen kommen. Dies liegt an den enormen Spannungen im Material, die immer dann entstehen, wenn einzelne Wassertropfen auf Metall treffen und dieses schlagartig abkühlen und abschrecken. Tropfenmitriss, auf heiße Flächen und Teile, muss daher unbedingt vermieden werden.

Bei den Systemen mit Abhitzenutzung wird der in dem Rohgasstrom mitgeführte Feinascheanteil auf der kalten Seite über ein keramisches Hochtemperaturfilter bei circa 300 °C trocken abgeschieden. Bei einem Direktquench im heißen Teil der Vergasung besteht dagegen tendenziell immer die Gefahr von Ablagerungen und Anbackungen der Schlacke- und Staubanteile des Heißgasstromes, wenn flüssige Schlackebestandteile und Asche auf gekühlte Flächen auftreffen und spontan erkalten und fest werden. Diese Anbackungen stellen ein weiteres Risiko dar, da sie unkontrolliert wachsen, die Strömungsverhältnisse unkontrollierbar verändern und sich in unvorhersehbarer Weise in undefinierten Brocken lösen können. Sie verstopfen dann die Schlackeaustragsorgane oder stören und zerstören andere Teile der Vorrichtung.

Aus dem Stand der Technik ist bereits eine Technologie bekannt, in der das Auftreten solcher Probleme weitgehend berücksichtigt ist. So beschreibt die WO 2009/036985 A1 einen Vergasungsreaktor und ein Verfahren zur Flugstromvergasung, bei dem der Reaktor durch drei Räume getrennt wird, durch die das erzeugte Synthesegas nacheinander strömt. Im ersten Raum fällt hierbei flüssige Schlacke an, die am Gasauslass des ersten Raumes im Gleichstrom mit dem abwärts strömenden Synthesegas an einer Schlackeabtropfkante abtropft und am Ende des zweiten Raumes in ein Wasserbad fällt. Im zweiten Raum, der vom ersten Raum durch einen frei fallenden Wasserschleier abgetrennt wird, findet eine Abkühlung des Synthesegases statt, wobei der Wasserschleier zwar erhitzt, aber dabei kaum verdampft wird. Im dritten Raum findet dann die Abquenchung des Synthesegases mit eingedüstem Wasser statt, bei der das Synthesegas in seinem Wassergehalt angereichert wird. Das Synthesegas ist bei Erreichen des dritten Raums bereits so weit abgekühlt, dass keine anbackungsfähigen Partikel mehr vorhanden sind.

Die WO 2009/036985 A1 lehrt, dass der Wasserschleier mittels einer trichterförmig ausgeführten Rampe erzeugt werden kann. Die WO 2011/107228 A2 beschreibt eine weitere Vorrichtung, mit der ein Wasserschleier in einem derartigen, drei Räume aufweisenden Vergasungsreaktor ausgeführt werden kann, wobei im zweiten Fall verbesserte Möglichkeiten zur Einstellung der Wassermenge und zur Fallgeschwindigkeit und Fallform des Wasserschleiers vorgesehen sind. In beiden Fällen kann es aber durch den heißen Gasstrom ansich sowie durch Turbulenz der Strömungsverhältnisse dazu kommen, dass Teile des Wasserschleiers nach oben aufgewirbelt werden und in den ersten Raum gelangen können. In diesem Fall würden Probleme an der Schlackeabtropfkante sowie an den Ausrüstungen im ersten Raum entstehen.

Zur Verringerung von Verwirbelungen lehrt die WO 2009/118082 A2 den Einsatz von drallvermindernden bzw. -verhindernden, nur einen Teil des Querschnitts des Übergangskanales durchsetzenden Wandflächen vor. Solche Maßnahmen sind zwar geeignet zur Verringerung der Flugaschemenge und zum Brechen von Gaswirbeln, deren Drehachse parallel zur Reaktorachse verläuft. Sie verlangsamen aber die Gasströmung nicht und führen auch nicht zur Verhinderung von Gaswirbeln, der Drehachse quer zur Reaktorachse verläuft. Sie verhindern auch kein Anheben des Wasserschleiers oder einen etwaigen Tropfenmitriss.

Die Aufgabe der Erfindung ist es daher, eine weiter verbesserte, konstruktive Lösung bereitzustellen, welche solchen Problemen effektiv entgegenwirkt. Mit der Lösung soll zum einen eine Strähnenbildung der ablaufenden Asche erreicht werden und die Bereitstellung von weiteren Schlackeführungsrinnen, die für einen optimalen Schlackeablauf sorgt, erreicht werden. Zum Anderen soll durch eine Trennung des Freistrahles vom Hinterraum eine Verwirbelung von Wasser im heißen Bereich vermieden werden, um erhöhte Materialermüdung durch Temperaturwechselbeanspruchung sowie Anbackungen zu verhindern.

Die Erfindung löst diese Aufgabe durch einen achsensymmetrischen Verlängerungsraum Ausgangs des Raumes, in dem die Vergasungsreaktion abläuft. Der achsensymmetrischer Verlängerungsraum führt den austretenden Hauptgasstrahl und verhindert eine Injektorwirkung des Gasstrahls. Speziell betrifft die Vorrichtung einen Vergasungsreaktor zur Vergasung von staubförmigen, festen, kohlenstoffhaltigen Brennstoffen im Flugstrom,
- mit einem ersten, oben im Reaktor angeordneten Reaktionsraum, in dessen oberem Bereich eine Zuführvorrichtung für Einsatzstoffe angeordnet ist, dessen Seitenwände mit Rohren mit Innenkühlung als Membranwand oder Rohrschlangen ausgestattet sind, an denen flüssige Schlacke frei ablaufen kann, ohne dass die Oberfläche dieser Schlacke dabei erstarrt, und an dessen Unterseite eine Öffnung für ablaufende Schlacke und austretendes Synthesegas vorgesehen wird,
- wobei sich unten an die Öffnung ein zweiter Raum anschließt, in dem das Rohgas trocken gehalten und durch Strahlungskühlung abgekühlt wird, und eine Vorrichtung zur Erzeugung eines Wasserschleiers vorgesehen wird,
- sich unten an den zweiten Raum ein dritter Raum anschließt, in dem Zuführeinrichtungen für Wasser vorgesehen sind,
- sich unten an den dritten Raum eine Aufnahmeeinrichtung für ein Wasserbad anschließt, welches auch eine Abzugsvorrichtung für eine Wasser-Schlacke-Gemisch aufweist,
- und unten oder seitlich des dritten Raums eine Abzugsvorrichtung für Rohgas aus dem Reaktor vorgesehen ist.
**gekennzeichnet durch** einen achsensymmetrischen Verlängerungsraum,
- der den Übergang vom ersten in den zweiten Raum bildet,
- und dessen Unterkante auf gleicher Höhe oder oberhalb der Höhe angeordnet ist, auf der der frei fallende Wasserschleier austritt,

Die Erfindung sieht weiterhin vor, dass die Oberkante des achsensymmetrischen Verlängerungsraums an der Unterseite des Reaktionsraums bündig anschließt,

Die Erfindung sieht zudem vor, dass der achsensysmmetrische Verlängerungsraum als Diffusor ausgeführt ist, wobei die Unterkante als Abtropfkante für Schlacke ausgeformt ist. Hierbei soll vorzugsweise der Diffusor einen Öffnungswinkel von 1 bis 15 Grad, vorzugsweise 5 bis 8 Grad, aufweisen.

In einer weiteren Ausgestaltung der Erfindung ist vorgesehen, dass die Kühlung der Seitenwände des Reaktionsraumes, die mit innen gekühlten Rohren mit Innenkühlung als Membranwand oder Rohrschlangen ausgeführt sind, auf die Außenwandung des achsensymmetrischen Verlängerungsraums verlängert wird. Diese können auf der Seite zum Gasstrom bestiftet und bestampft sein. Eine weitere Ausführungsvariante sind innen gekühlte Rohre, welche gasseitig gegen Hochtemperatur-Korrosion beschichtet sind.

Der erfindungsgemäße Diffusor darf nicht mit einer Abschirmvorrichtung, wie sie in Fig. 3 der WO 2009/036985 A1 gezeigt wird, verwechselt werden, die dort gezeigten Abschirmvorrichtungen dienen dem Schutz des Druckbehälters vor zu großer Strahlungswärme und bleiben auch in der Variante mit einer rohrförmigen Abtrennung bestehen. Die rohrförmige Abtrennung dient nicht der Abschirmung des Druckbehälters, sondern der Trennung und Strömungsführung des austretenden Gasstrahl und ist baulich entsprechend anders ausgeführt.

Die Erfindung betrifft auch das Verfahren zur Vergasung von staubförmigen, festen, kohlenstoffhaltigen Brennstoffen im Flugstrom unter Einsatz eines achsensymmetrischen Verlängerungsraums gemäß Anspruch 5. Weiterhin wird der austretende Gasstrahl vom Hinterraum abgeschirmt und kann dadurch nicht mehr seine Injektorwirkung entfalten. Diese Abbremsung der Strömung, die durch eine Vergleichmäßigung des Strömungsprofils in Verbindung mit einer Aufweitung des Querschnitts erreicht wird, bewirkt, dass der Differenzdruck zwischen der Oberseite und der Unterseite der Wasserlamelle verringert wird. Hierdurch wird die Tendenz des Gasstrahls, den Wasserschleier anzuheben und teilweise zu verwirbeln, erheblich reduziert. Hierdurch wird auch bewirkt, dass keine Gaswirbel oberhalb des Wasserschleiers entstehen können, durch die Tröpfchenmitriss an heiße Teile des Reaktionsraums gelangen könnte.

Die Erfindung wird im folgenden anhand von 4 Skizzen näher erläutert. Hierbei zeigen:
- Fig. 1: einen Reaktor gemäß WO 2009/036985 A1 mit einem zusätzlichen Gasdiffusor.
- Fig. 2: den Übergangsbereich des Reaktionsraumes in den zweiten Raum mit dem Gasdiffusor und einer Wasserrampe zur Erzeugung eines Wasserschleiers.
- Fig. 3: den Übergangsbereich des Reaktionsraumes in den zweiten Raum mit dem Gasdiffusor und einer alternativen Vorrichtung zu Erzeugung eines Wasserschleiers.
- Fig. 4: den Übergangsbereich des Reaktionsraumes in den zweiten Raum mit einem nicht erfindungsgemäßen alternativen achsensymmetrischen Verlängerungsraum.

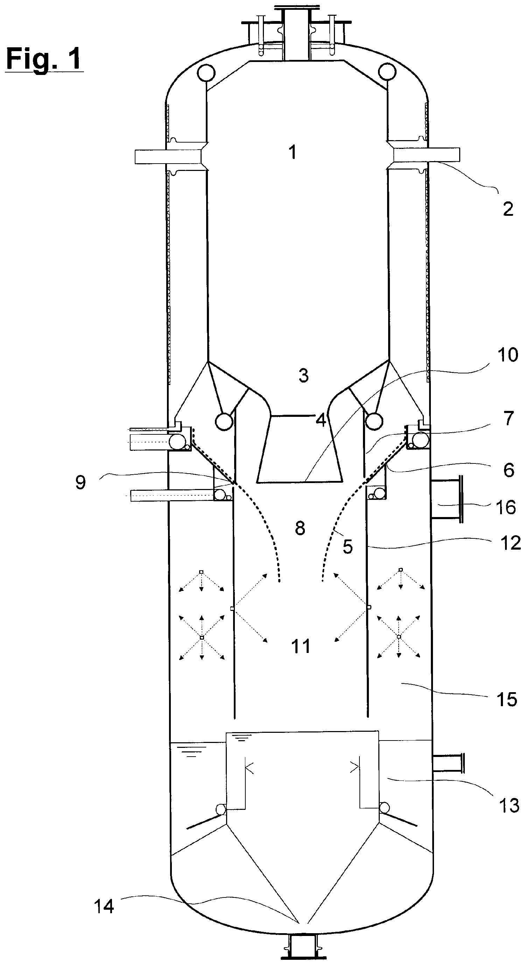

Fig. 1 zeigt im oberen Bereich den Reaktionsraum des Vergasers 1 mit den Brennern 2. Das ca. 1500 °C heiße Rohgas, das flüssige Schlacketröpfchen und Aschepartikel enthält, verlässt den Reaktionsraum des Vergasers 1 über den Austritt aus dem Reaktionsraum 3, wobei das Rohgas üblicherweise einen Drall aufweist, der bewirkt, dass sich ein großer Teil der flüssigen Schlacke an den gekühlten Wandungen des Reaktionsraums niederschlägt und als Flüssigkeit im Wandbereich des Austritts herunterläuft. Das heiße Rohgas wird im Gasdiffusor 4 abgebremst und über den Querschnitt vergleichmäßigt.

Es trifft auf den Wasserschleier 5, der als Kühlfläche wirkt und das heiße Rohgas schnell abkühlt. Bei diesem Abkühlvorgang erstarren flüssige Schlacketröpfchen und können nicht mehr an Wänden anbacken. Der Wasserschleier wird auf der Wasserrampe 6 erzeugt. Die Wassermenge des Wasserschleiers ist hierbei so groß gewählt, dass sich der Wasserschleier nicht soweit erhitzt, dass er sieden und verdampfen kann. Daher bleibt das Rohgas in diesem Abkühlungsbereich, der den zweiten Raum 8 bildet, noch weitgehend trocken. Der Gasdiffusor 4 verhindert, dass die Gasströmung den Wasserschleier 5 anhebt und Tropfen gegen die Abschirmung 7 oder an die Abtropfkante 10 gelangen können. Die Abtropfkante 10 des Gasdiffusors 4 ist dabei knapp oberhalb des Austritts 9 des Wasserschleiers angeordnet.

Im nachfolgenden dritten Raum 11 wird das noch heiße Rohgas mit Wasser aus Düsen abgequencht. Der dritte Raum 11 wird durch die Trennwand 12 geteilt und im Ringraum 15 verlängert, die erkalteten Schlackepartikel aus dem abgekühlten Rohgas und die erstarrten Schlacketropfen aus der Abtropfkante 10 fallen in das Wasserbad 13 und werden am Schlackeaustrag 14 abgezogen. Das gesättigte Synthesegas tritt am Synthesegasaustritt 16 aus dem Vergasungsreaktor aus.

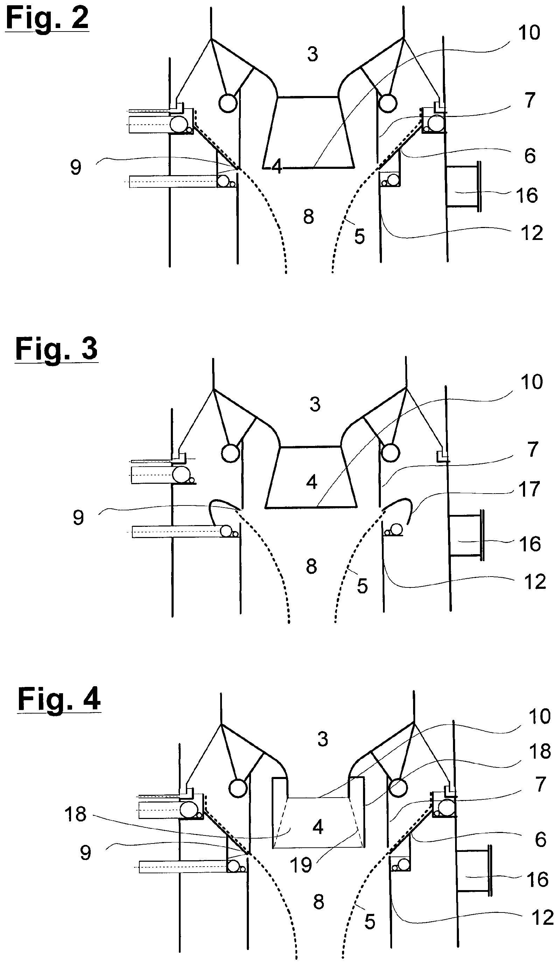

Fig. 2 zeigt den Übergangsbereich, in dem der Gasdiffusor angeordnet ist, im Ausschnitt. Fig. 3 zeigt den gleichen Ausschnitt, wobei die Wasserrampe durch einen Düsentorus entsprechend der WO 2011/107228 A2 ersetzt wird.

Fig. 4 zeigt eine nicht erfindungsgemäße Bauform des gleichen Abschnitts, bei dem ein alternativer achsensymmetrischer Verlängerungsraum zum Einsatz kommt. Bei diesem Ausführungsbeispiel wird eine Umhausung 18 vorgesehen, dessen Unterkante der Öffnung des Freistrahls 19 des Synthesegases entspricht.

### Bezugzeichenliste:

- 1: Reaktionsraum des Vergasers
- 2: Brenner
- 3: Austritt aus dem Reaktionsraum
- 4: Achsensymmetrischer Verlängerungsraum
- 5: Wasserschleier
- 6: Wasserrampe
- 7: Abschirmung
- 8: zweiter Raum
- 9: Austritt Wasserschleier
- 10: Abtropfkante
- 11: dritter Raum
- 12: Trennwand
- 13: Wasserbad
- 14: Schlackeaustrag
- 15: Ringraum
- 16: Synthesegasaustritt
- 17: Düsentorus
- 18: Umhausung
- 19: Freistrahl

## Patentansprüche

1. Vergasungsreaktor zur Vergasung von staubförmigen, festen, kohlenstoffhaltigen Brennstoffen im Flugstrom,
• mit einem ersten, oben im Reaktor angeordneten Reaktionsraum, in dessen oberem Bereich eine Zuführvorrichtung für Einsatzstoffe angeordnet ist, dessen Seitenwände mit Rohren mit Innenkühlung als Membranwand oder Rohrschlangen ausgestattet sind, an denen flüssige Schlacke frei ablaufen kann, ohne dass die Oberfläche dieser Schlacke dabei erstarrt, und an dessen Unterseite eine Öffnung für ablaufende Schlacke und austretendes Synthesegas vorgesehen wird,
• wobei sich unten an die Öffnung ein zweiter Raum anschließt, in dem das Rohgas trocken gehalten und durch Strahlungskühlung abgekühlt wird, und eine Vorrichtung zur Erzeugung eines Wasserschleiers vorgesehen wird,
• sich unten an den zweiten Raum ein dritter Raum anschließt, in dem Zuführeinrichtungen für Wasser vorgesehen sind,
• sich unten an den dritten Raum eine Aufnahmeeinrichtung für ein Wasserbad anschließt, welches auch eine Abzugsvorrichtung für eine Wasser-Schlacke-Gemisch aufweist,
• und unten oder seitlich des dritten Raums eine Abzugsvorrichtung für Rohgas aus dem Reaktor vorgesehen ist,
**gekennzeichnet durch** einen achsensymmetrischen Verlängerungsraum,
• der den Übergang vom ersten in den zweiten Raum bildet,
• und dessen Unterkante auf gleicher Höhe oder oberhalb der Höhe angeordnet ist, auf der der frei fallende Wasserschleier austritt,
• dessen Oberkante an der Unterseite des Reaktionsraums bündig anschließt, und
• der als Diffusor ausgeführt ist, wobei die Unterkante als Abtropfkante für Schlacke ausgeformt ist.

2. Vorrichtung nach Anspruch 1,
**dadurch gekennzeichnet, dass** der Diffusor einen Öffnungswinkel von 1 bis 15 Grad aufweist.

3. Vorrichtung nach Anspruch 1,
**dadurch gekennzeichnet, dass** der Diffusor einen Öffnungswinkel von 5 bis 8 Grad aufweist.

4. Vorrichtung nach einem der Ansprüche 1 bis 3,
**dadurch gekennzeichnet, dass** die Kühlung der Seitenwände des Reaktionsraumes, die mit innen gekühlten Rohren als Membranwand oder Rohrschlangen ausgeführt sind, auf die Außenwandung des achsensymmetrischen Verlängerungsraums verlängert wird.

5. Verfahren zur Vergasung von staubförmigen, festen, kohlenstoffhaltigen Brennstoffen im Flugstrom unter Einsatz eines einem der Ansprüche 1 bis 4 entsprechenden achsensymmetrischen Verlängerungsraums,
**dadurch gekennzeichnet, dass** die Gasströmung, die am Austritt des Reaktionsraums eine hohe Geschwindigkeit aufweist, vor Eintritt in den zweiten Raum, in dem das Rohgas trocken gehalten und durch Strahlungskühlung abgekühlt wird, und in dem ein Wasserschleier erzeugt wird, durch den als Diffusor ausgeführten achsensymmetrischen Verlängerungsraum eine Abbremsung durch eine Vergleichmäßigung des Strömungsprofils in Verbindung mit einer Aufweitung des Querschnitts erfährt, so dass der Differenzdruck zwischen der Oberseite und der Unterseite des Wasserschleiers verringert wird, was die Tendenz des Gasstrahls, den Wasserschleier anzuheben und zu verwirbeln, reduziert.

## Claims

1. A gasification reactor for the gasification of solid, hydrocarbonaceous fuels in dust form in an entrained flow,
• having a first reaction chamber, which is arranged at the top of the reactor, in the upper region of which chamber a supply device for input materials is arranged, the side walls of which chamber are equipped with pipes with inner cooling in the form of a membrane wall or pipe coils, at which liquid slag can drain away freely without the surface solidifying said slag in the process, and on the underside of which chamber an opening is provided for draining slag and escaping synthesis gas,
• a second chamber adjoining the bottom of the opening, in which chamber the crude gas is kept dry and cooled by radiation cooling, and a device being provided to produce a water spray,
• a third chamber adjoining the bottom of the second chamber, in which third chamber supply devices for water are provided,
• a collection device for a water bath adjoining the bottom of the third chamber, said water bath also having an extraction device for a water-slag mixture,
• a device for extracting crude gas from the reactor being provided at the bottom or the side of the third chamber,
**characterised by** an axisymmetrical extension chamber,
• which forms the transition from the first chamber to the second chamber,
• and the lower edge of which is arranged at the same height or above the height at which the free-falling water spray exits,
• the upper edge of which adjoins the underside of the reaction chamber flush with same, and
• which is in the form of a diffuser, wherein the lower edge is shaped as a drip edge for slag.

2. The device according to Claim 1,
**characterised in that**
the diffuser has an opening angle of 1 to 15 degrees.

3. The device according to Claim 1,
**characterised in that**
the diffuser has an opening angle of 5 to 8 degrees.

4. The device according to any one of Claims 1 to 3, **characterised in that**
the cooling of the side walls of the reaction chamber, which are in the form of a membrane wall or pipe coils with internally cooled pipes, is extended to the outer walls of the axisymmetrical extension chamber.

5. A method for the gasification of solid, hydrocarbonaceous fuels in dust form in an entrained flow using an axisymmetrical extension chamber corresponding to one of Claims 1 to 4,
**characterised in that**
the gas flow, which has a high speed at the exit of the reaction chamber, is slowed before entering the second chamber, in which the crude gas is kept dry and cooled by radiation cooling and in which a water spray is produced, by the axisymmetrical extension chamber in the form of a diffuser as a result of the flow profile being made more uniform in conjunction with the cross-section being widened, so that the pressure difference between the top side and the underside of the water spray is reduced, which reduces the tendency of the gas jet to lift and swirl the water spray.

## Revendications

1. Réacteur de gazéification pour la gazéification de combustibles poussiéreux, solides et carbonés en lit entraîné
• avec une première chambre de réaction disposée en haut dans le réacteur, dans la zone supérieure de laquelle est disposé un dispositif d'alimentation en produits d'utilisation, dont les parois latérales sont dotées de tuyaux avec refroidissement intérieur sous la forme de paroi en membrane ou de serpentins sur lesquels du laitier liquide peut s'écouler librement sans que la surface de ce laitier se solidifie à cette occasion et sur la face inférieure de laquelle une ouverture est prévue pour le laitier s'écoulant et le gaz de synthèse sortant,
• une deuxième chambre se raccordant en dessous à l'ouverture dans laquelle le gaz brut est maintenu sec et est refroidi par refroidissement par rayonnement et un dispositif pour produire un rideau d'eau pulvérisée étant prévu,
• une troisième chambre se raccordant en dessous à la deuxième chambre dans laquelle des dispositifs d'alimentation en eau sont prévus,
• un dispositif de réception se raccordant en dessous à la troisième chambre pour un bain d'eau, lequel comporte également un dispositif d'évacuation pour un mélange eau-laitier,
• et en dessous ou sur le côté de la troisième chambre, un dispositif d'évacuation du gaz brut du réacteur étant prévu,
**caractérisé par** une chambre de prolongation symétrique par rapport à l'axe
• qui forme le passage de la première à la deuxième chambre,
• et dont le bord inférieur est disposé à la même hauteur ou au-dessus de la hauteur à laquelle sort le rideau d'eau pulvérisée tombant librement,
• dont le bord supérieur se raccorde en alignement au bord inférieur de la chambre de réaction, et
• qui est exécutée comme diffuseur, le bord inférieur étant conformé comme bord d'égouttement pour le laitier.

2. Dispositif selon la revendication 1,
**caractérisé en ce que**
le diffuseur comporte un angle d'ouverture de 1 à 15 degrés.

3. Dispositif selon la revendication 1,
**caractérisé en ce que**
le diffuseur comporte un angle d'ouverture de 5 à 8 degrés.

4. Dispositif selon l'une quelconque des revendications 1 à 3,
**caractérisé en ce que**
le refroidissement des parois latérales de la chambre de réaction, qui sont exécutées avec des tuyaux refroidis à l'intérieur sous la forme de paroi en membrane ou de serpentins, est prolongé sur le cloisonnement extérieur de la chambre de prolongation symétrique par rapport à l'axe.

5. Procédé de gazéification de combustibles poussiéreux, solides et carbonés en lit entraîné en utilisant une chambre de prolongation symétrique par rapport à l'axe selon l'une quelconque des revendications 1 à 4, **caractérisé en ce que**
l'écoulement du gaz, présentant une vitesse élevée à la sortie de la chambre de réaction, avant l'entrée dans la deuxième chambre dans laquelle le gaz brut est maintenu sec et est refroidi par refroidissement par rayonnement et dans laquelle un rideau d'eau pulvérisée est produit, subit à travers la chambre de prolongation symétrique par rapport à l'axe exécutée comme diffuseur, un freinage par une modération comparative du profil d'écoulement en liaison avec une extension de la section de telle manière que la différence de pression entre la face supérieure et la face inférieure du rideau d'eau pulvérisée est diminuée, ce qui réduit la tendance du jet gazeux à relever et à faire tourbillonner le rideau d'eau pulvérisée.
